# EUROPEAN PATENT SPECIFICATION

(11) **EP 2 941 965 B1**
(45) Date of publication and mention of the grant of the patent: **27.02.2019**
(21) Application number: 15166219.4
(22) Date of filing: 04.05.2015
(51) Int. Cl.: A23K 40/30, A23K 20/20, A23K 20/163

(54) **COATED ANIMAL FEED**
BESCHICHTETES TIERFUTTER
ALIMENT POUR ANIMAUX ENROBÉ

(30) Priority: 05.05.2014 IT MI20140821
(43) Date of publication of application: 11.11.2015
(73) Proprietor: DOX-AL ITALIA S.p.A., 20121 Milano (IT)
(72) Inventor: Veneroni, Flavio, 6612 Ascona (CH); Dameno, Susanna, 20064 Gorgonzola (IT)
(74) Representative: Cattaneo, Elisabetta

(56) References cited:
- CN-A- 102 935 110
- SU-A1- 1 351 564
- US-A- 2 331 807
- US-A- 5 531 994

## Description

### FIELD OF THE INVENTION

The present invention relates to a method for the preparation of feed matrices in order to check the safety of the matrix and of the final feed, which can contain elements with known toxicity. The cited substances resulted to be toxic in certain amounts, in certain absorption pathways, depending on the exposure time. In particular, the invention relates to matrices containing manganese.

The present invention is defined by the claims.

### BACKGROUND OF THE INVENTION

For the preparation of matrices for use in animal feeds, elements are used that have proved toxic in certain amounts, not only for the final animal, but above all for industry workers, both during preparation of the matrix itself and in the formulation and delivery of the final feed.

In particular, the metals included in feeds as essential trace elements have proved toxic when necessarily handled during the production process. Reference is in particular made to the toxicity generated by manganese, zinc, aluminium and cobalt. National health institutes have recently focused on the dangerousness of manganese in particular.

Manganese is an essential element that must be included in the ingredients to be added to the final feed. It is moreover required that this be in certain amounts, both in relation to the animal species and by type of farming. Manganese in fact not only regulates glucose metabolism, the synthesis of cholesterol, of connective and cartilaginous tissue, but is also essential to nutrition in that it is a constituent and activator of important enzymes such as arginase, enolase and carboxylase. It is currently added as manganese oxide to animal feeds produced in flour, pellets or with other forms.

However, in order to make the final feed or during handling of the feed itself, during handling of the pre-mixes that contain the manganese, it is known that there are emissions inhalable by the handlers and users along the production chain up to delivery of the feed to the animals. (Miscetti G. et al "An experience of monitoring Enviromental Pollution and Occupational Exposure to manganese dusts, in Animal feeding Industry"- from Eight International Symposium on Neurobehavioral Methods and Effects in Occupational and Enviromental Health-23 June 2002- Brescia; "Italian Journal of Occupational and Enviromental Hygiene, october 2011 vol 2" .

It is also known that the manganese absorbed by inhalation has neurotoxic effects, and is therefore, currently, among the most hazardous metals for feed industry handlers (Zatta P. Lucchini RG, van Rensburg SJ, Taylor A. role of metals in neurodegenerative process: aluminium, manganese and zinc, Brain Res Bull, 2003, 62:15-1; "Exposition aux pollutants mineraux dans les enterpreises de fabrication d'aliments pour animaux - NRS ND 2213-196-04". Contact and inhalation exposure to products containing said toxic elements is thus a problem for all feed industry workers, specifically as the latter have proved to be those most at risk in terms of quantity and duration.

In the case of manganese for example, in accordance with occupational exposure standards (OES), industry workers are not at risk if they come into contact with manganese compounds in the amount of 5 mg/m³ in 8 hours, or to manganese exhalation of 1mg/m³ in 8 hours ("Dust pollution and Mn in feed mills and zootechnical plants" - Industrial hygienists journal - vol. 29 No. 2- April 2003).

There is therefore a need to provide feeds that guarantee a safe dispersion, by exhalation or by contact, of the toxic elements contained therein.

In EP0197188 a process for the preparation of animal feeds that prevents flour or pellet mixtures being dusty is described, thus preventing the generation of dusts that can be dangerous for industry workers. Specifically it is described a process for the preparation of non-dusty mixtures for use as ready matrices for animal feeds, particularly containing antibacterial agents, said process comprising the step of mixing the supports of said matrices with a anti-dust additive containing a physiologically compatible nonionic surfactant, such as polyethylene glycol or propylene glycol. If, on the one hand, this process has proved to be particularly advantageous as it has allowed less powdery mixtures and final feeds to be obtained, the same mixtures and the same feeds have not however always proved guaranteed in relation to dispersion of the toxic elements during production chain processing up to the delivery to the animal.

D1 describes an animal feed comprising zinc bacitracin, calcium carbonate and fermentation residues. As stated in the background of the invention, the zinc bacitracin, which is added to the animal fodder, is known to be less stable to the heat and to the moisture. In order to stabilize the active principle the complete feed is coated with a polymer.

D2 describes coated granules containing oregano oil for birds. Specifically, silicon dioxide or calcium carbonate are used as a core material; starch, betacyclodextrin and microcrystalline cellulose are used as a coating layer. After the mixing of the core and the coating layer, the granules so obtained are dried and sprayed with oregano oil.

D3 describes the preparation of an additive for animal feed by adding to a calcium carbonate chloride, ammonium and sodium perchlorate. To this mixture a potassium permanganate is added as a water mixture and the final mixture is then granulated.

It is in fact essential that the permitted safety limits are met for all the elements that can be deemed toxic for industry workers. This problem is now even more evident in the case of manganese as it has also proved to be neurotoxic to humans.

The object of the present invention is therefore to provide a feed with a certain and guaranteed release/exhalation of toxic elements.

### SUMMARY OF THE INVENTION

The above-indicated object has been achieved by means of a process for the preparation of a matrix for animal feed comprising the following steps:
a) mixing granules of a raw material of plant or mineral origin, wherein each granule of the raw material comprises one or more food additives adhered thereon in a certain amount;
b) spraying said mixture of granules with a water-soluble coating mixture comprising a filming substance selected from starch and its derivatives, cellulose and its derivatives;
c) obtaining the matrix for animal feed comprising fully or partially coated granules,
wherein said raw material of plant or mineral origin is selected from the group consisting of calcium carbonate, hazelnut flour, corncob, semolina, sepiolite, bentonite, sugars and grape skins,
and wherein said food additive adhered on the granules of the raw material is a manganese salt.

According to the invention, the final matrix will therefore be the sum of granules having a predetermined amount of one or more food additive/s adhering thereon, said granules being fully or partially coated with said coating mixture.

In the present description, use of the term/terms:
- "food additive" means any additive that can be added to the raw material in granules and intended to be a part of the food matrix to be added to food to make the feed. According to the present invention, said "food additive" is a "trace element", i.e. a chemical element (micronutrient) in an amount less than 100 µg/g, to be provided to the animal with a feed. According to the invention, said food additive is a salt of manganese, even more preferably, in the form of manganese oxide;
- "full or partial coating" or "fully or partially coated granules" indicates that the granule coating is equal to at least 90% of the surface of the granule itself.

Surprisingly, the inventors of the present invention have found that the preparation of granules each having a partial or complete coating ensures that the chosen food additives (preferably metals such as trace elements) are kept within the safety limits for industry workers.

In particular, the inventors had the intuition to coat granules, be they containing one or more food additives, to prevent dispersion/exhalation in the environment of the food additive/additives themselves. In particular, the invention has proven to be advantageous if the matrix is made of granules comprising manganese salts, preferably in the form of oxide. In the case of the preferred embodiment of the invention wherein the granule comprises manganese, the final dust level of the granule proved to be inferior to or equal to 4 micrograms/Heubach filter or less than or equal to 200 micrograms/m³ ("The control of Toxic substances" by Pickard- Nor Feed Limited").

The invention therefore comprises a matrix formed by granules, fully or partially coated with a coating mixture, comprising multiple food additives adhered on the individual granule, or a matrix comprising one or more sub-matrix/ces, said one or more sub-matrix/ces, each one comprising granules with a single food additive adhered thereon.

The invention will now be described in detail and subsequently exemplified in the experimental section.

### DETAILED DESCRIPTION OF THE INVENTION

The invention therefore concerns process for the preparation of a matrix for animal feed comprising the following steps:
a) mixing granules of a raw material of plant or mineral origin, wherein each granule of the raw material comprises one or more food additives adhered thereon in a certain amount;
b) spraying said mixture of granules with a water-soluble coating mixture comprising a filming substance selected from starch and its derivatives, cellulose and its derivatives;
c) obtaining the matrix for animal feed comprising fully or partially coated granules,
wherein said raw material of plant or mineral origin is selected from the group consisting of calcium carbonate, hazelnut flour, corncob, semolina, sepiolite, bentonite, sugars and grape skins,
and wherein said food additive adhered on the granules of the raw material is a manganese salt.

According to the invention, the final matrix will therefore be the sum of granules having a predetermined amount of one or more food additive/s adhered thereon, said granules being fully or partially coated with said coating mixture.

The raw material of the invention is selected from the group consisting of calcium carbonate, hazelnut flour, corncob and semolina, sepiolite, bentonite, sugars, grape skins, preferably it is calcium carbonate or hazelnut flour.

The invention therefore provides in step a) the mixing of granules having adhered one or more food additives thereon. Advantageously, the matrix will comprise a mixture of granules having different sub-matrices for each type of food additive and therefore each granule of each sub-matrix constituting the matrix in step a) will have just one type of food additive adhering thereon.

Said food additive can be any additive capable of being adhered on the granules of the raw material. For the present invention, said elementary additive is preferably an element, more preferably a metal, considered toxic for the industry workers in certain amounts.

Advantageously, the granules that form the raw material of step a) will be substantially uniform in terms of granulometry and, the final matrix having the granules with food additives of the various sub-matrices adhered thereon, will possess specific granulometric specifications as a function of the number of granules needed to ensure the presence of each individual food additive, in the amounts provided by the formulator

For the preparation of the individual sub-matrices which constitute the matrix in the preferred embodiment of the invention (or for the preparation of the matrix) of step a), the invention provides for the granules of raw material to be preventively processed in a mixer adding the emulsifying substances, excipients and subsequently the food additive (or additives), while keeping the mixer in operation. Advantageously, mixing step a) of the granules of the invention takes place in the same mixer, and without interruption of the mixing, of the preparation of the granules with food additives adhered thereon. According to the invention manganese is adhered on the granule, alone or with other ingredients, the matrix of mixing step a) was preventively treated, advantageously in the same mixer, with manganese oxide which thus adheres to each granule.

Preferably, the emulsifying substances of the adhesion step of the food ingredients are selected from the group indicated in the following table:

| **Abbreviation** | **Emulsifier** | **Hydrophilic** | **Lipophilic** |
|---|---|---|---|
| a | E420 Sorbitol | X | |
| b | E496 Peg 6000 | X | |
| c | E491 Sorbitan monostearate | | X |
| d | E433 Polyoxyethylene sorbitan monooleate | X | |
| e | E432 Polyoxyethylene sorbitan monolaurate | X | |
| f | E434 Polyoxyethylene sorbitan monopalmitate | | X |
| g | E435 Polyoxyethylene sorbitan monostearate | | X |
| h | E484 glyceryl polyethylene glycol ricinoleate | X | |
| i | polysorbate 20 | X | |

Mixtures of emulsifiers can be used. The preferred mixtures of the invention are:

| |
|---|
| a+c |
| a+e |
| b+d |
| b+e |
| h+d |
| h+e |

The preferred mixtures of emulsifiers of the invention are advantageously in the following ratios:

| **mixtures** | **ratio 1** | **ratio 2** | **ratio 3** |
|---|---|---|---|
| a+c | 10:2 | 10:1 | 10:3 |
| a+e | 8:2 | 10:1 | 10:2 |
| b+d | 8:2 | 10:2 | 10:1 |
| b+e | 10:1 | 10:2 | 10:3 |
| h+d | 10:1 | 10:2 | 8:2 |
| h+e | 10:1 | 10:2 | 8:2 |

Polyvinylpyrrolidone can be cited among the excipients of step a).

Step b) of the invention consists of spraying the mixture of granules with a water-soluble coating mixture comprising a filming substance selected from starch or its derivatives, cellulose and its derivatives.

The coating mixture according to the invention therefore comprises a filming substance selected from starch and its derivatives, cellulose and its derivatives. Preferably, said filming substance is selected from the group consisting of modified starch, hydroxypropylmethyl cellulose, and mixtures thereof. The coating mixture according to the invention is a water-soluble mixture comprising, in addition to the filming substance, additives for the stabilization of the coating mixture. Said additives are preferably selected from the group consisting of talc, mannitol, soy lecithin, microcrystalline cellulose and stearic acid. More preferably, the coating mixture of the invention is a solution in water in a concentration by weight from 10 to 25% (w/w).

The matrix of step c) therefore comprises granules having one or more food additives adhered thereon, each one fully or partially coated by the coating mixture. As indicated in the summary of the invention, "full or partial coating" or "fully or partially coated granules" means that the coating with the coating mixture is equal to at least 90% of the surface of the granule.

Advantageously, according to the invention, animal feed matrices formed by granules having one or more food additives adhered thereon, including metal elements, in certain, guaranteed amounts and that are not subjected to the dispersion or exhalation into the surrounding environment beyond the permitted limits, are therefore prepared.

In the preferred embodiment of the invention in which the matrix comprises granules in turn comprising manganese, the final matrix resulted to be guaranteed for exhalation/dispersion of the manganese itself into the surrounding environment in all production chain preparation steps up to handling during delivery of the final feed.

As it will be evident from the experimental section that follows, the ingredients adhered and fixed on the granules remained such even after being subjected to stress. For example, in the case of granules with adhered and fixed manganese, such as manganese oxide, the manganese fraction on the filter was less than 4 µg/filter, i.e. equal to 200µg/m³, for both the matrix as it is, i.e. the matrix just out of step c), and after being subjected to compressive stress at 2 tons/cm² or heating at 70 °C for 10 minutes and subsequent compression at 2 tons/cm². These stress conditions simulated the conditions to which the matrices/feeds were subjected during the processing and handling steps.

The matrices of the invention, therefore with food ingredients adhered and guaranteed in terms of dispersion quantity and capacity in the environments, are then mixed with the food to be given to the animal, thus providing the final feed. In another aspect, the invention therefore relates to a matrix made of granules with food additives adhering thereon and a feed comprising the matrix of the invention and the food to be given to the animal.

The stability index of the animal feed produced with the matrix of the invention was excellent, excluding the dispersion/exhalation risks of the food ingredients during all feed handling steps in both the production site and in the distribution and use.

### Example 1:

### General procedure for the preparation of the coating mixture of the invention:

The amount of coating mixture powder, comprising the filming substance and additives, needed to prepare an aqueous solution in an established concentration from 10 to 25%, was placed in a liquid dissolver. The amount of purified water needed for the chosen dilution was then added and stirring was then activated. It was then mixed until complete dissolution of the powder and, in any case, until a suspension that was homogenous also in terms of colour was obtained.

### Preparation of the water-soluble coating mixture A

A coating mixture A with the following ingredients was prepared by following the above general process:

| | |
|---|---|
| Modified starch | 70.6 % |
| Talc | 15.3 % |
| Mannitol | 8.2 % |
| Soy lecithin | 5.9 % |

In order to obtain a suspension at a concentration of 10%, 10% of the above-described mixture of ingredients was taken and 90% of purified water was added.

In order to obtain a suspension at a concentration of 20%, 20% of the above-described mixture of ingredients was taken and 80% of purified water was added.

In order to obtain a suspension at a concentration of 25%, 25% of the above-described mixture of ingredients was taken and 75% of purified water was added.

### Example 2: Preparation of the water-soluble coating mixture B

A coating mixture B with the following ingredients was prepared by following the above general process:

| | |
|---|---|
| Hydroxypropyl methylcellulose 6 cps | 31.6 % |
| Hydroxypropyl methylcellulose 3 cps | 25.9 % |
| Microcrystalline cellulose | 11.0% |
| Stearic acid | 31.5 % |

In order to obtain a suspension at a concentration of 10%, 10% of the above-described mixture of ingredients was taken and 90% of purified water was added.

In order to obtain a suspension at a concentration of 20%, 20% of the above-described mixture of ingredients was taken and 80% of purified water was added.

In order to obtain a suspension at a concentration of 25%, 25% of the above-described mixture of ingredients was taken and 75% of purified water was added.

Cps is the viscosity measurement unit for hydroxypropyl cellulose. In this case, the nominal viscosity calculated on a 2% powder dispersion in distilled water at a T of 20 °C, has been indicated.

### Example 3: Preparation of the matrix with manganese as food ingredient

### Example 3.1. Manganese at 5% (with respect to the total of 200 g)

The following ingredients were used in the preparation of a 200 g sample:

| | |
|---|---|
| manganese oxide | 16.4 g |
| polysorbate 20 | 4.0 g |
| polyvinylpyrrolidone | 4.0 g |
| water-soluble coating mixture B | 0.2 g |
| calcium carbonate | qs for 200 g |

Calcium carbonate was placed in a belt mixer and the mixer activated. Polysorbate 20 was then added, while keeping the mixer in operation, and the manganese oxide was then added. Polyvinylpyrrolidone was added after 1 minute of mixing. The mass was then mixed for 5 minutes and the water-soluble coating mixture B was then added to the same mixer by spraying and mixing was continued for further 5 minutes. The mass was then unloaded into a bag for packaging and storage.

### Example 3.2. Manganese 5% (with respect to the total of 200 g)

The following ingredients were used for a 200 g sample:

| | |
|---|---|
| manganese oxide | 16.4 g |
| polysorbate 20 | 8.0 g |
| polyvinylpyrrolidone | 4.0 g |
| water-soluble coating mixture B at 10% | 0.3 g |
| hazelnut fibre flour | qs for 200 g |

Following the process indicated in 3.1, and adding the ingredients indicated above, a matrix with manganese was obtained ready for packaging and storage.

### Example 3.3. Manganese 10% (with respect to the total of 200 g)

The following ingredients were used for a 200 g sample:

| | |
|---|---|
| manganese oxide | 32.8 g |
| polysorbate 20 | 6.0 g |
| polyvinylpyrrolidone | 4.0 g |
| water-soluble coating mixture B at 10% | 0.3 g |
| calcium carbonate | qs for 200 g |

Following the process indicated in 3.1, and adding the ingredients indicated above, a matrix with manganese was obtained ready for packaging and storage.

### Example 3.4. Manganese 10% (with respect to the total of 200 g)

The following ingredients were used for a 200 g sample:

| | |
|---|---|
| manganese oxide | 32.8 g |
| polysorbate 20 | 14.0 g |
| polyvinylpyrrolidone | 4.0 g |
| water-soluble coating mixture B at 10% | 0.5 g |
| hazelnut fibre flour | qs for 200 g |

Following the process indicated in 3.1, and adding the ingredients indicated above, a matrix with manganese was obtained ready for packaging and storage.

### Example 3.5. Manganese 15% (with respect to the total of 200 g)

The following ingredients were used for a 200 g sample:

| | |
|---|---|
| manganese oxide | 49.2 g |
| polysorbate 20 | 3.2 g |
| polyvinylpyrrolidone | 2.0 g |
| water-soluble coating mixture B at 10% | 0.4 g |
| calcium carbonate | qs for 200 g |

Following the process indicated in 3.1, and adding the ingredients indicated above, a matrix with manganese was obtained ready for packaging and storage.

### Example 3.6 Manganese 15 % (with respect to the total of 200 g)

The following ingredients were used for a 200 g sample:

| | |
|---|---|
| manganese oxide | 49.2 g |
| polysorbate 20 | 14.0 g |
| polyvinylpyrrolidone | 4.0 g |
| water-soluble coating mixture B at 10% | 0.4 g |
| hazelnut fibre flour | qs for 200 g |

Following the process indicated in 3.1, and adding the ingredients indicated above, a matrix with manganese was obtained ready for packaging and storage.

### Example 3.7 Manganese 20% (with respect to the total of 200 g)

The following ingredients were used for a 200 g sample:

| | |
|---|---|
| manganese oxide | 65.6 g |
| polysorbate 20 | 5.2 g |
| polyvinylpyrrolidone | 4.0 g |
| water-soluble coating mixture B at 10% | 2.0 g |
| calcium carbonate | qs for 200 g |

Following the process indicated in 3.1, and adding the ingredients indicated above, a matrix with manganese was obtained ready for packaging and storage.

### Example 3.8. Manganese 20% (with respect to the total of 200 g)

The following ingredients were used for a 200 g sample:

| | |
|---|---|
| manganese oxide | 65.6 g |
| polysorbate 20 | 15.2 g |
| polyvinylpyrrolidone | 4.0 g |
| water-soluble coating mixture B at 10% | 2.5 g |
| hazelnut fibre flour | qs for 200 g |

Following the process indicated in 3.1, and adding the ingredients indicated above, a matrix with manganese was obtained ready for packaging and storage.

### Example 3.9. Manganese 25% (with respect to the total of 200 g)

The following ingredients were used for a 200 g sample:

| | |
|---|---|
| manganese oxide | 82.0 g |
| polysorbate 20 | 5.6 g |
| polyvinylpyrrolidone | 4.0 g |
| water-soluble coating mixture A at 10% | 3.2 g |
| calcium carbonate | qs for 200 g |

Following the process indicated in 3.1, and adding the ingredients indicated above, a matrix with manganese was obtained ready for packaging and storage.

### Example 3.10. Manganese 25% (with respect to the total of 200 g)

The following ingredients were used for a 200 g sample:

| | |
|---|---|
| manganese oxide | 82.0 g |
| polysorbate 20 | 15.8 g |
| polyvinylpyrrolidone | 4.0 g |
| water-soluble coating mixture A at 10% | 3.6 g |
| hazelnut fibre flour | qs for 200 g |

Following the process indicated in 3.1, and adding the ingredients indicated above, a matrix with manganese was obtained ready for packaging and storage.

### Example 3.11. Manganese 30% (with respect to the total of 200 g)

The following ingredients were used for a 200 g sample:

| | |
|---|---|
| manganese oxide | 88.0 g |
| polysorbate 20 | 6.4 g |
| polyvinylpyrrolidone | 4.3 g |
| water-soluble coating mixture A at 10% | 3.2 g |
| calcium carbonate | qs for 200 g |

Then, following the process indicated in 3.1, and adding the ingredients indicated above, a matrix with manganese was obtained ready for packaging and storage.

### Example 3.12 Manganese 30% (with respect to the total of 200 g)

The following ingredients were used for a 200 g sample:

| | |
|---|---|
| manganese oxide | 88.0 g |
| polysorbate 20 | 16.3 g |
| polyvinylpyrrolidone | 4.0 g |
| water-soluble coating mixture A at 10% | 4.6 g |
| hazelnut fibre flour | qs for 200 g |

Following the process indicated in 3.1, and adding the ingredients indicated above, a matrix with manganese was obtained ready for packaging and storage.

### Example 3.13 Manganese 20% (with respect to the total of 200 g)

The following ingredients were used for a 200 g sample:

| | |
|---|---|
| manganese oxide | 65.6 g |
| polysorbate 20 | 5.2 g |
| polyvinylpyrrolidone | 4.0 g |
| water-soluble coating mixture A at 20% | 1.0 g |
| calcium carbonate | qs for 200 g |

Following the process indicated in 3.1, and adding the ingredients indicated above, a matrix with manganese was obtained ready for packaging and storage.

### Example 3.14 Manganese 20% (with respect to the total of 200 g)

The following ingredients were used for a 200 g sample:

| | |
|---|---|
| manganese oxide | 65.6 g |
| polysorbate 20 | 15.2 g |
| polyvinylpyrrolidone | 4.0 g |
| water-soluble coating mixture A at 20% | 1.5 g |
| hazelnut fibre flour | qs for 200 g |

Following the process indicated in 3.1, and adding the ingredients indicated above, a matrix with manganese was obtained ready for packaging and storage.

### Example 3.15 Manganese 25% (with respect to the total of 200 g)

The following ingredients were used for a 200 g sample:

| | |
|---|---|
| manganese oxide | 82.0 g |
| polysorbate 20 | 5.6 g |
| polyvinylpyrrolidone | 4.0 g |
| water-soluble coating mixture B at 20% | 2.2 g |
| calcium carbonate | qs for 200 g |

Following the process indicated in 3.1, and adding the ingredients indicated above, a matrix with manganese was obtained ready for packaging and storage.

### Example 3.16 Manganese 25% (with respect to the total of 200 g)

The following ingredients were used for a 200 g sample:

| | |
|---|---|
| manganese oxide | 82.0 g |
| polysorbate 20 | 15.8 g |
| polyvinylpyrrolidone | 4.0 g |
| water-soluble coating mixture A at 20% | 2.6 g |
| hazelnut fibre flour | qs for 200 g |

Following the process indicated in 3.1, and adding the ingredients indicated above, a matrix with manganese was obtained ready for packaging and storage.

### Example 3.17 Manganese 20% (with respect to the total of 200 g)

The following ingredients were used for a 200 g sample:

| | |
|---|---|
| manganese oxide | 65.6 g |
| polysorbate 20 | 5.2 g |
| polyvinylpyrrolidone | 4.0 g |
| water-soluble coating mixture A at 20% | 0.8 g |
| calcium carbonate | qs for 200 g |

Following the process indicated in 3.1, and adding the ingredients indicated above, a matrix with manganese was obtained ready for packaging and storage.

### Example 3.18. Manganese 20% (with respect to the total of 200 g)

The following ingredients were used for a 200 g sample:

| | |
|---|---|
| manganese oxide | 65.6 g |
| polysorbate 20 | 15.2 g |
| polyvinylpyrrolidone | 4.0 g |
| water-soluble coating mixture B at 20% | 1.2 g |
| hazelnut fibre flour | qs for 200 g |

Following the process indicated in 3.1, and adding the ingredients indicated above, a matrix with manganese was obtained ready for packaging and storage.

### Example 3.19 Manganese 25% (with respect to the total of 200 g)

The following ingredients were used for a 200 g sample:

| | |
|---|---|
| manganese oxide | 82.0 g |
| polysorbate 20 | 5.6 g |
| polyvinylpyrrolidone | 4.0 g |
| water-soluble coating mixture A at 20% | 1.7 g |
| calcium carbonate | qs for 200 g |

Following the process indicated in 3.1, and adding the ingredients indicated above, a matrix with manganese was obtained ready for packaging and storage.

### Example 3.20 Manganese 25% (with respect to the total of 200 g)

The following ingredients were used for a 200 g sample:

| | |
|---|---|
| manganese oxide | 82.0 g |
| polysorbate 20 | 15.8 g |
| polyvinylpyrrolidone | 4.0 g |
| water-soluble coating mixture B at 20% | 2.2 g |
| hazelnut fibre flour | qs for 200 g |

Following the process indicated in 3.1, and adding the ingredients indicated above, a matrix with manganese was obtained ready for packaging and storage.

### Example 4. Evaluation of the matrix of the invention

A series of determinations were carried out in order to verify the safety of all the matrices obtained in examples 3.1-3.20 in relation to the dispersion/exhalation of manganese.

The following were evaluated: manganese fineness, total dust on Heubach filter, fractions < 100 and 50 µm of the matrices as such and of the matrices after compression at 2 tons/cm². Compression was performed with a compressing machine, while verifying particle size, so as to evaluate the fractions having a size < 100 and 50 µm before compression and after compression. The sub-matrices presenting less than 5% matrix fractions with particle sizes of less than 100 µm and 50 µm were deemed compliant and unchanged. Evaluation of resistance to compression stress at 2tons/cm2 was deemed satisfactory as greater than the stresses envisaged in the production cycle. The matrix was also subjected to determination, using the Heubach appliance, of the residue that had collected on the filter. Determination of the emission index using the Heubach appliance is a satisfactory laboratory simulation of individual exposure to hazardous substances in occupational situations, therefore demonstrating if the matrix obtained resulted to be advantageously safe for the worker in the work environment. ("The control of toxic substances" by D. Pickard). Filter emission should have been less than 1mg/filter. In order to simulate the stresses arising from feed preparation by the final user, the following analyses were also carried out: determination of the total dust on Heubach filter and of the Mn after heating the sample at 70 °C for 10 minutes and contextual compression at 2 tons/cm².

The results are reported in Tables 1,2,3 below.

**Table 1: Evaluation of the product as is**

| **test no.** | **Product as is** | | | | |
|---|---|---|---|---|---|
| | **Theoretical content in Mn** | **Total dust level in mg/filter** | **µg Mn on filter** | **Fractions < 100 µm** | **Fractions < 50 µm** |
| 3.1 | 5% | 0.05 | 0.01 | 0 | 0 |
| 3.2 | 5% | 0.05 | 0.01 | 0 | 0 |
| 3.3 | 10% | 0.1 | 0.04 | 0 | 0 |
| 3.4 | 10% | 0.1 | 0.05 | 0 | 0 |
| 3.5 | 15% | 0.3 | 0.01 | 0 | 0 |
| 3.6 | 15% | 0.2 | 0.01 | 0 | 0 |
| 3.7 | 20% | 0.1 | 0.05 | 0 | 0 |
| 3.8 | 20% | 0.2 | 0.18 | 0 | 0 |
| 3.9 | 25% | 0.1 | 0.05 | 0 | 0 |
| 3.10 | 25% | 0.3 | 0.14 | 0 | 0 |
| 3.11 | 30% | 0.3 | 0.21 | 0.1% | 0 |
| 3.12 | 30% | 0.1 | 0.04 | 0.1% | 0 |
| 3.13 | 20% | 0.2 | 0.02 | 0 | 0 |
| 3.14 | 20% | 0.2 | 0.03 | 0 | 0 |
| 3.15 | 25% | 0.2 | 0.02 | 0.1% | 0 |
| 3.16 | 25% | 0.2 | 0.04 | 0.1% | 0 |
| 3.17 | 20% | 0.1 | 0.03 | 0 | 0 |
| 3.18 | 20% | 0.1 | 0.03 | 0 | 0 |
| 3.19 | 25% | 0.2 | 0.05 | 0.1% | 0 |
| 3.20 | 25% | 0.2 | 0.05 | 0.1% | 0 |

**Table 2: Evaluation of the product after compression at 2 tons/cm²**

| **test no.** | **after treatment: compression at 2 tons/cm²** | | | |
|---|---|---|---|---|
| | **Total dust level in mg/filter** | **µg Mn on** | **Fractions < 100 µm** | **Fractions < 50 µm** |
| 3.1 | 0.1 | 0.06 | 0 | 0 |
| 3.2 | 0.1 | 0.02 | 0 | 0 |
| 3.3 | 0.1 | 0.05 | 0 | 0 |
| 3.4 | 0.1 | 0.05 | 0 | 0 |
| 3.5 | 0.1 | 0.02 | 0 | 0 |
| 3.6 | 0.1 | 0.03 | 0 | 0 |
| 3.7 | 0.1 | 0.04 | 0.12% | 0 |
| 3.8 | 0.1 | 0.25 | 0.15% | 0.1% |
| 3.9 | 0.1 | 0.05 | 0.20% | 0.1% |
| 3.10 | 0.2 | 0.28 | 0.22% | 0.1% |
| 3.11 | 0.3 | 0.35 | 0.32% | 0.2% |
| 3.12 | 0.3 | 0.06 | 0.35% | 0.25% |
| 3.13 | 0.2 | 0.04 | 0.21% | 0.1% |
| 3.14 | 0.2 | 0.05 | 0.24% | 0.1% |
| 3.15 | 0.2 | 0.03 | 0.31% | 0.2% |
| 3.16 | 0.2 | 0.06 | 0.32% | 0.23% |
| 3.17 | 0.1 | 0.04 | 0.15% | 0.1% |
| 3.18 | 0.1 | 0.05 | 0.18% | 0.1% |
| 3.19 | 0.2 | 0.07 | 0.16% | 0.1% |
| 3.20 | 0.2 | 0.06 | 0.17% | 0.2% |

**Table 3: Evaluation of the product after heating for 10 minutes at 70 °C and compression at 2 tons/cm²**

| **test no.** | **after treatment: compression at 2 tons/cm² after heating for 10' at 70 °C** | | | |
|---|---|---|---|---|
| | **Total dust level in mg/filter** | **µg Mn on filter** | **Fractions < 100 µm** | **Fractions < 50 µm** |
| 3.1 | 0 | 0.08 | 0 | 0.1% |
| 3.2 | 0 | 0.08 | 0 | 0.1% |
| 3.3 | 0.1 | 0.07 | 0 | 0.12% |
| 3.4 | 0.1 | 0.20 | 0 | 0.13% |
| 3.5 | 0.2 | 0.22 | 0.1% | 0.15% |
| 3.6 | 0.2 | 0.33 | 0.1% | 0.12% |
| 3.7 | 0.1 | 0.13 | 0.15% | 0.02% |
| 3.8 | 0.1 | 0.13 | 0.12% | 0.10% |
| 3.9 | 0.3 | 0.35 | 0.24% | 0.15% |
| 3.10 | 0.3 | 0.36 | 0.28% | 0.19% |
| 3.11 | 0.1 | 0.16 | 0.42% | 0.45% |
| 3.12 | 0.1 | 0.40 | 0.50% | 0.51% |
| 3.13 | 0.1 | 0.12 | 0.16% | 0.17% |
| 3.14 | 0.1 | 0.14 | 0.14% | 0.10% |
| 3.15 | 0.2 | 0.16 | 0.21% | 0.18% |
| 3.16 | 0.2 | 0.14 | 0.26% | 0.21% |
| 3.17 | 0.1 | 0.16 | 0.15% | 0.14% |
| 3.18 | 0.1 | 0.15 | 0.12% | 0.14% |
| 3.19 | 0.3 | 0.25 | 0.24% | 0.20% |
| 3.20 | 0.3 | 0.27 | 0.26% | 0.27% |

In order to be considered satisfactory, the values of the matrix as such had to be:
Total dust level: < 2 mg/filter
Mn on filter: < 4 µg/filter equal to 200 µg/m³
Fractions < 100 microns: < 10%
Fractions < 50 microns: < 2%

For the matrix subjected to the compression of Table 2 and to heating and subsequent compression of Table 3, the values were considered satisfactory when they resulted to be within the following limits:
Total dust level as such: < 2 mg/filter
Mn on filter as such: < 4 µg/filter equal to 200 µg/m³
Fractions < 100 microns as such: < 10%
Fractions < 50 microns as such: < 2%

As it can be seen from Tables 1, 2, 3, the process of the invention ensured that the emissions/dispersions/exhalations of the toxic element, manganese in the case of the example, were well below what is permitted to ensure the safety of feed industry workers. The process of the invention therefore guaranteed that the matrix maintained the ingredients within the limits permitted by law, even under conditions of stress that reproduced the conditions to which the workers are subjected.

## Claims

1. A process for the preparation of a matrix for animal feed comprising the following steps:
a) mixing granules of a raw material of plant or mineral origin, wherein each granule of the raw material comprises one or more food additives adhered thereon in a certain amount;
b) spraying said mixture of granules with a water-soluble coating mixture comprising a filming substance selected from starch and its derivatives, cellulose and its derivatives;
c) obtaining the matrix for animal feed comprising fully or partially coated granules,
wherein said raw material of plant or mineral origin is selected from the group consisting of calcium carbonate, hazelnut flour, corncob, semolina, sepiolite, bentonite, sugars and grape skins,
and wherein said food additive adhered on the granules of the raw material is a manganese salt.

2. The process according to claim 1 wherein the raw material is selected from the group consisting of calcium carbonate and hazelnut flour.

3. The process according to claim 1 or 2, wherein in the step a) granules of raw material are present, comprising each granule, independently each other, a single additive adhered on it.

4. The process according to claim 3, wherein said food additive is manganese oxide.

5. The process according to anyone of claims 1-4, wherein the filming substance of the water-soluble coating mixture is selected from the group consisting of modified starch, hydroxypropylmethyl cellulose and their mixture.

6. The process according to anyone of claims 1-5, wherein the water-soluble coating mixture comprises, further to the filming substance, additives for the stabilization of the coating mixture selected from the group consisting of talc, mannitol, soy lecithin, microcrystalline cellulose and stearic acid.

7. The process according to anyone of claims 1-6, wherein the water-soluble coating mixture is a water solution with a weight concentration from 10 to 25%.

8. The process according to anyone of claims 1-7, wherein the fully or partially coated granules have a coating of the coating mixture of at least 90% of the granule surface.

9. A matrix made of granules with food ingredients adhered thereon and guaranteed for quantity and dispersion ability in the environments, said matrix being obtainable by the process according to anyone of claims 1-8.

10. The matrix according to claim 9, wherein the granules have manganese adhered on them and therein fixed and the manganese fraction on filter is below to 4 µg/filter, i.e. equals to 200 µg/m³.

11. Animal feed comprising the matrix according to claim 9 or 10 and the food to be given to the animal.

## Patentansprüche

1. Verfahren zur Herstellung einer Matrix für Tierfutter, umfassend die folgenden Schritte:
(a) Mischen von Körnern aus einem Rohmaterial pflanzlichen oder mineralischen Ursprungs, wobei jedes Korn aus dem Rohmaterial einen oder mehrere Futterzusatzstoffe umfasst, die in einer bestimmten Menge daran anhaften;
(b) Besprühen des Gemischs aus Körnern mit einem wasserlöslichen Beschichtungsgemisch, das eine filmbildende Substanz umfasst, die aus Stärke und ihren Derivaten, Cellulose und ihren Derivaten ausgewählt ist,
(c) Erhalten der Matrix für Tierfutter, die vollständig oder teilweise beschichtete Körner umfasst,
wobei das Rohmaterial pflanzlichen oder mineralischen Ursprungs ausgewählt ist aus der Gruppe, bestehend aus Calciumcarbonat, Haselnussmehl, Maisspindel, Gries, Sepiolit, Bentonit, Zuckern und Traubenschalen,
und wobei der Futterzusatz, der an den Körnern aus dem Rohmaterial anhaftet, ein Mangansalz ist.

2. Verfahren nach Anspruch 1, wobei das Rohmaterial ausgewählt ist aus der Gruppe, bestehend aus Calciumcarbonat und Haselnussmehl.

3. Verfahren nach Anspruch 1 oder 2, wobei in dem Schritt (a) Körner aus Rohmaterial vorhanden sind, das umfasst, dass an jedem Korn unabhängig voneinander ein einziger Zusatzstoff anhaftet.

4. Verfahren nach Anspruch 3, wobei der Futterzusatzstoff Manganoxid ist.

5. Verfahren nach einem der Ansprüche 1 bis 4, wobei die filmbildende Substanz aus dem wasserlöslichen Beschichtungsgemisch ausgewählt ist aus der Gruppe, bestehend aus modifizierter Stärke, Hydroxypropylmethylcellulose und ihrem Gemisch.

6. Verfahren nach einem der Ansprüche 1 bis 5, wobei das wasserlösliche Beschichtungsgemisch zusätzlich zu der filmbildenden Substanz Zusatzstoffe für die Stabilisierung des Beschichtungsgemischs umfasst, ausgewählt aus der Gruppe, bestehend aus Talk, Mannitol, Sojalecithin, mikrokristalliner Cellulose und Stearinsäure.

7. Verfahren nach einem der Ansprüche 1 bis 6, wobei das wasserlösliche Beschichtungsgemisch eine wässrige Lösung mit einer Gewichtskonzentration von 10 bis 25% ist.

8. Verfahren nach einem der Ansprüche 1 bis 7, wobei die vollständig oder teilweise beschichteten Körner eine Beschichtung oder ein Beschichtungsgemisch von zumindest 90% der Kornoberfläche aufweisen.

9. Matrix, die aus Körnern hergestellt ist, an denen Futterbestandteile anhaften und deren Menge und Dispersionsfähigkeit in der Umgebung gewährleistet ist, wobei die Matrix durch das Verfahren nach einem der Ansprüche 1 bis 8 erhältlich ist.

10. Matrix nach Anspruch 9, wobei an den Körnern Mangan anhaftet und darin fixiert ist, und der Mangananteil auf Filter unter 4 µm/Filter liegt, d.h. gleich 200 µg/m³ ist.

11. Tierfutter, das die Matrix nach Anspruch 9 oder 10 und das dem Tier zu verabreichende Futter umfasst.

## Revendications

1. Procédé pour la préparation d'une matrice d'aliment pour les animaux comprenant les étapes suivantes :
a) le mélange de granules d'une matière première d'origine végétale ou minérale, dans lequel chaque granule de la matière première comprend un ou plusieurs additifs alimentaires mis à adhérer dessus dans une certaine quantité ;
b) la pulvérisation dudit mélange de granules avec un mélange d'enrobage soluble dans l'eau comprenant une substance filmogène choisie parmi l'amidon et ses dérivés, la cellulose et ses dérivés ;
c) l'obtention de la matrice d'aliment pour les animaux comprenant des granules totalement ou partiellement enrobés,
dans lequel ladite matière première d'origine végétale ou minérale est choisie dans le groupe consistant en le carbonate de calcium, la farine de noisette, les épis de maïs, la semoule, la sépiolite, la bentonite, des sucres et des peaux de raisin,
et dans lequel ledit additif alimentaire mis à adhérer sur les granules de la matière première est un sel de manganèse.

2. Procédé selon la revendication 1, dans lequel la matière première est choisie dans le groupe consistant en le carbonate de calcium et la farine de noisette.

3. Procédé selon la revendication 1 ou 2, dans lequel à l'étape a) des granules de matière première sont présents, comprenant chaque granule, indépendamment les uns des autres, un seul additif mis à adhérer dessus.

4. Procédé selon la revendication 3, dans lequel ledit additif alimentaire est l'oxyde de manganèse.

5. Procédé selon l'une quelconque des revendications 1 à 4, dans lequel la substance filmogène du mélange d'enrobage soluble dans l'eau est choisie dans le groupe consistant en l'amidon modifié, l'hydroxypropylméthyl cellulose et leur mélange.

6. Procédé selon l'une quelconque des revendications 1 à 5, dans lequel le mélange d'enrobage soluble dans l'eau comprend, en plus de la substance filmogène, des additifs pour la stabilisation du mélange d'enrobage choisis dans le groupe consistant en le talc, le mannitol, la lécithine de soja, la cellulose microcristalline et l'acide stéarique.

7. Procédé selon l'une quelconque des revendications 1 à 6, dans lequel le mélange d'enrobage soluble dans l'eau est une solution aqueuse avec une concentration en poids de 10 à 25 %.

8. Procédé selon l'une quelconque des revendications 1 à 7, dans lequel les granules totalement ou partiellement enrobés présentent un enrobage du mélange d'enrobage d'au moins 90 % de la surface de granule.

9. Matrice réalisée en granules avec des ingrédients alimentaires mis à adhérer dessus et dont la quantité et la capacité de dispersion dans l'environnement sont garanties, ladite matrice pouvant être obtenue par le procédé selon l'une quelconque des revendications 1 à 8.

10. Matrice selon la revendication 9, dans laquelle les granules ont du manganèse mis à adhérer sur eux-mêmes et fixé à l'intérieur et la fraction de manganèse sur le filtre est inférieure à 4 µg/filtre, c'est-à-dire égale à 200 µg/m³.

11. Aliment pour les animaux comprenant la matrice selon la revendication 9 ou 10 et la nourriture à donner à l'animal.
